# EUROPÄISCHE PATENTSCHRIFT

(11) **EP 1 692 022 B1**
(45) Veröffentlichungstag und Bekanntmachung des Hinweises auf die Patenterteilung: **02.04.2008**
(21) Anmeldenummer: 04803591.9
(22) Anmeldetag: 07.12.2004
(51) Int. Cl.: B60R 25/00, B60R 25/10

(54) **SYSTEM UND VERFAHREN ZUR ÜBERWACHUNG DES LADERAUMS EINER TRANSPORTEINRICHTUNG**
SYSTEM AND METHOD FOR MONITORING THE CARGO SPACE OF A TRANSPORTING DEVICE
SYSTEME ET PROCEDE DE SURVEILLANCE DU COMPARTIMENT A MARCHANDISES D'UN DISPOSITIF DE TRANSPORT

(30) Priorität: 10.12.2003 DE 20319131 U
(43) Veröffentlichungstag der Anmeldung: 23.08.2006
(73) Patentinhaber: Herth + Buss GmbH & Co. KG, 63150 Heusenstamm (DE)
(72) Erfinder: KNÜPFER, Jürgen, 07552 Gera (DE)
(74) Vertreter: Tergau & Pohl Patentanwälte
(86) Internationale Anmeldenummer: PCT/EP2004/013909
(87) Internationale Veröffentlichungsnummer: WO 2005/056350

(56) Entgegenhaltungen:
- EP-A- 1 255 235
- WO-A-01/18491
- WO-A-02/093521
- DE-U1- 20 217 446

## Beschreibung

Die Erfindung betrifft ein Überwachungssystem für den Laderaum einer Transporteinrichtung wie beispielsweise eines Lastkraftwagens, eines Flugzeugs oder eines Containers mit einer Steuereinheit, der ein Kennwert für den aktuellen Bewegungszustand der Transporteinrichtung zuführbar ist, und die dateneingangsseitig mit einer Anzahl von Bewegungsmeldern und datenausgangsseitig mit einer Anzahl von Bilderfassungsgeräten verbunden ist und bei dem das oder jedes Bilderfassungsgerät mit einem Speichermodul verbunden ist. Sie bezieht sich weiter auf ein Verfahren zur Überwachung des Laderaums einer derartigen Transporteinrichtung. Document WO02/093521 offenbart ein solches System.

Beim Transport hochwertiger Güter oder Produkte wie beispielsweise elektronischer Geräte, Computersysteme, Mobiltelefone, Speicherchips oder anderer High-Tech-Produkte sind zunehmend Ausfälle und Verluste durch Diebstahl zu beobachten. Dabei ist insbesondere während einer Transportphase, in der vergleichsweise große Mengen derartiger hochwertiger Waren in entsprechenden Transporteinrichtungen wie beispielsweise Lastkraftwagen, Flugzeugen, Schiffscontainern oder dergleichen gemeinsam gehandhabt werden, eine vergleichsweise hohe Verlustrate durch Diebstahl festzustellen, da im Gegensatz zur Aufbewahrung der Geräte in feststehenden Gebäuden nur eine begrenzte Absicherung durch Verschlussmechanismen oder dergleichen möglich ist.

Um derartigen Verlusten durch Diebstahl beispielsweise beim Transport hochwertiger Waren auf Lastkraftfahrzeugen zu begegnen, können Überwachungssysteme für den Laderaum des Lastkraftfahrzeugs zum Einsatz kommen. Bei derartigen Überwachungssystemen wird üblicherweise die Ladeklappe des Lastkraftfahrzeugs versiegelt oder verschlossen gehalten und zusätzlich auf ein unautorisiertes Öffnen hin überwacht. Dabei kann festgestellt werden, dass die Ladeklappe unplanmäßig geöffnet wird, woraus auf einen Diebstahlversuch geschlossen werden kann. Zusätzlich oder alternativ können Überwachungskameras für den Laderaum eingesetzt werden, bei denen analog zur Videoüberwachung beispielsweise öffentlicher Gebäude der Laderaum der Transporteinrichtung dauerhaft überwacht wird, wobei die dabei gewonnenen Bilddaten beispielsweise auf Magnetaufzeichnungsträgern gespeichert und für eine Archivierung bereit gehalten werden.

Überwachungssysteme der genannten Art haben jedoch den Nachteil, dass beispielsweise eine Überwachung der Ladeklappe allein nicht ausreicht, um unberechtigten Zugang zum Laderaum beispielsweise durch Beschädigung der Seitenwände der Transporteinrichtung, insbesondere von Seitenplanen eines Lastkraftwagens, mitzuerfassen. Somit ist bei derartigen Systemen ein unberechtigter Zugang zum Laderaum möglich, ohne dass dies von einem derartigen Überwachungssystem erkannt würde. Der Einsatz von Überwachungskameras hat hingegen den Nachteil, dass diese insbesondere in Verbindung mit den Bildaufzeichnungssystemen vergleichsweise stoß- und witterungsempfindlich sein können und somit für einen robusten Dauereinsatz auch unter widrigen Umgebungsbedingungen nur bedingt geeignet sind. Zudem erschwert die Aufzeichnung und Archivierung der Bilddaten in Form von Magnetaufzeichnungsträgern wie beispielsweise Videokassetten eine gezielte Auswertung des Bildmaterials, da auch vergleichsweise unrelevante Informationen und somit vergleichsweise große Informationsmengen abgespeichert werden.

Zur Absicherung hochwertiger Waren können daher aufwendige und somit kostenintensive Prozeduren notwendig sein, bei denen beispielsweise Barcodes oder Transponder-Warensicherungssysteme verwendet werden oder von spezifisch ausgebildetem Personal Stichprobenprüfungen oder sogar vollständige Warenbegleitungen vorgenommen werden.

Der Erfindung liegt die daher Aufgabe zugrunde, ein Überwachungssystem für den Laderaum einer Transporteinrichtung anzugeben, das einerseits für eine robuste Ausführung und somit einen zuverlässigen Einsatz auch unter widrigen Umgebungsbedingungen besonders geeignet ist und andererseits eine besonders hohe Zuverlässigkeit bei der Laderaumüberwachung gewährleistet. Des Weiteren soll ein zu diesen Zwecken besonders geeignetes Verfahren zur Überwachung des Laderaums einer Transporteinrichtung angegeben werden.

Bezüglich des Überwachungssystems wird diese Aufgabe erfindungsgemäß gelöst indem in dem oder jedem Speichermodul Kennwerte für erlaubte Be- und/oder Entladepositionen hinterlegt sind, und wobei die Bilderfassungsgeräte en Abhängigkeit vom aktuellen Bewegungszustand und einer festgestellten Bewegung in Laderaum aktiviert werden.

Die Erfindung geht dabei von der Überlegung aus, dass eine besonders hohe Sicherheit und Zuverlässigkeit bei der eigentlichen Laderaumüberwachung durch den Einsatz optischer Überwachungsmittel, insbesondere von Bilderfassungsgeräten, im Gegensatz zur bloßen Überwachung der Ladeklappen der Transporteinrichtung, erreichbar ist. Um bei einer derartigen Grundauslegung des Überwachungssystems auf optische Überwachungsmittel eine besonders hohe betriebliche Robustheit insbesondere im Hinblick auf die erforderliche Datenspeicherung und -archivierung zu ermöglichen, sollte das Überwachungssystem gezielt für eine bedarfsgesteuerte Erfassung von Bilddaten des Laderaums ausgelegt sein. Gerade im Hinblick auf die Abspeicherung der erfassten Bilddaten ist dabei eine besondere Vereinfachung und damit einhergehend eine besonders robuste Ausführung des Überwachungssystems erreichbar, indem die Speicherung und Archivierung nicht benötigter Daten - beispielsweise für diejenigen Zeiträume, in denen keinerlei unautorisierter Zugang zur Ladefläche vorliegt - von vornherein vermieden wird. Um dies zu erreichen, sollte die Erfassung von Überwachungsbildern auf diejenigen Situationen beschränkt werden, in denen ein Erfassungsbedarf erkannt wurde, so dass konsequenterweise nur diejenigen Daten archiviert werden, die für eine spätere Auswertung auch als relevant herangezogen werden.

Um dies zu ermöglichen, sollten die als Überwachungsmittel vorgesehenen Bilderfassungsgeräte, wie beispielsweise Überwachungskameras, grundsätzlich in einem so genannten "Stand-By-Modus" betrieben werden und lediglich im Fall eines erkannten Überwachungsbedarfs voll aktiviert werden. Dazu ist eine Steuereinheit vorgesehen, die die Bilderfassungsgeräte in derartigen Situationen gezielt ansteuert und aktiviert. Zur Erkennung des Erfassungsbedarfs sollte die Steuereinheit dabei eingangsseitig mit geeigneten Daten beaufschlagt werden. Um dabei einerseits dem Umstand Rechnung zu tragen, dass Diebstähle üblicherweise nur beim Stillstand der Transporteinrichtung, nicht aber beispielsweise während einer Fahrt eines Lastkraftfahrzeugs oder eines Fluges erfolgen, sollte die Steuereinrichtung einerseits mit Daten über den Bewegungszustand der Transporteinrichtung beaufschlagt werden. Andererseits sollte als Kriterium für die Auslösung der Bilddatenerfassung eine festgestellte Bewegung im zu überwachenden Laderaum herangezogen werden. Die Steuereinheit kann dabei vorzugsweise derart ausgelegt sein, dass eine Aktivierung der Bilderfassungsgeräte nur dann erfolgt, wenn sowohl die Transporteinrichtung sich gerade im Stillstand befindet als auch eine Bewegung im Laderaum registriert wird.

Statt einer Zuführung eines - üblicherweise automatisiert ermittelten - Kennwerts über den Bewegungszustand der Transporteinrichtung kann auch eine - beispielsweise manuelle - Aktivierung des Überwachungssystems vorgesehen sein, beispielsweise wenn sich die Transporteinrichtung im Ruhezustand befindet oder ein anderer möglicherweise diebstahlrelevanter Zustand vorliegt. Dies kann insbesondere in Betracht kommen, wenn es sich bei der Transporteinrichtung um einen Container, beispielsweise einen Schiffscontainer, handelt.

Um einen Datentransport und/oder eine spätere externe Auswertung der erfassten Bilddaten zu ermöglichen, ist das oder jedes Bildererfassungsgerät daher mit einem Speichermodul verbunden. Weiterhin sind im Speichermodul des Überwachungssystems Kennwerte für erlaubte Be- und/oder Entladepositionen hinterlegt. Damit kann bei der bedarfsweisen Aktivierung des Überwachungssystems als Kriterium berücksichtigt werden, ob sich die Transporteinrichtung aktuell an einer Position befindet, an der mit Be- und Entladevorgängen gerechnet wird, so dass hier von einer Aktivierung abgesehen werden kann.

Der Bewegungsmelder kann beispielsweise in der Art handelsüblicher Bewegungsmelder ausgeführt sein, die insbesondere menschliche Bewegungen im Laderaum erkennen können. Alternativ oder zusätzlich umfassen die Bewegungsmelder vorteilhafterweise eine Anzahl von Beschleunigungssensoren, die insbesondere in drei Raumachsen und richtungsabhängig Beschleunigungsdaten für den Laderaum liefern können.

Derartige Beschleunigungssensoren können derart empfindlich ausgelegt sein, dass beispielsweise die durch Bewegungen von Personen auf der Ladefläche eines Lastkraftwagens erzeugten Schwingungen und Positionsänderungen der Ladefläche registriert werden können. Derartige Beschleunigungssensoren können zudem in besonders vorteilhafter Ausgestaltung auch zur Feststellung einer Verschiebung von Ladegut während der Fahrt herangezogen werden, so dass in einer derartigen Konstellation das Überwachungssystem auch zur Überwachung des Ladeguts auf Beschädigungen während der Fahrt, beispielsweise durch extreme Vibrationen, Schockbelastungen oder dergleichen, genutzt werden kann.

In besonders vorteilhafter Ausgestaltung ist das jeweilige Speichermodul dabei für eine digitale Datenspeicherung ausgebildet, wobei vorzugsweise eine Ausgestaltung als Multi-Media-Card vorgesehen ist. Dabei kann es sich insbesondere um digitale Speicherkarten handeln, wie sie beispielsweise auch in Digitalkameras zur Anwendung kommen können. Derartige Speicherkarten sind einerseits in einem vergleichsweise breiten Temperaturbereich von - 25 °C bis + 85 °C einsetzbar, so dass auch bei vergleichsweise widrigen Umgebungsbedingungen ein zuverlässiger Betrieb des Überwachungssystems mit der Speicherung der erfassten Bilddaten ermöglicht ist. Zudem sind derartige Speicherkarten besonders resistent gegenüber den im Rahmen eines Lastkraftwagen-Betriebs auftretenden Schock- und Vibrationsbelastungen. Sie sind weiterhin weitgehend wartungsfrei und zeichnen sich durch einen geringen Raumbedarf und vergleichsweise niedrige Herstellungs- oder Beschaffungskosten aus. Gerade durch die mit dem Überwachungssystem erreichte bedarfsorientierte Aufnahme von Überwachungsbildern, die zu einer deutlichen Herabsetzung der benötigten Speicherkapazitäten führt, sind die Vorteile derartiger Speicherkarten nutzbar, ohne dass dem eine für Aufzeichnungszwecke zu geringe Speicherkapazität entgegenstehen würde.

Eine besonders bedarfsgerechte Nutzung vorhandener Speicherkapazitäten und eine besonders gezielte Fokussierung der Bilderfassung auf als auch tatsächlich relevant angesehene Situationen ist erreichbar, indem das oder jedes Bilderfassungsgerät vorteilhafterweise nach einer Aktivierung durch die Steuereinheit eine vorgebbare Anzahl von Bildern erfasst, wobei anschließend wieder eine Deaktivierung des jeweiligen Bilderfassungsgeräts erfolgt. Dabei startet die Steuereinheit somit die Bilderfassung, nachdem anhand der ermittelten Eingangsdaten auf eine relevante Situation, beispielsweise durch Bewegungen auf der Ladefläche, erkannt wurde. Nach dem Start der Bilderfassung läuft diese aber nicht unbegrenzt durch, sondern ist vielmehr auf eine vorgebbare Datenmenge limitiert. Dabei kann beispielsweise eine vorgegebene Beobachtungsdauer oder auch eine vorgegebene Anzahl zu erfassender Einzelbilder als Begrenzung für die Bilderfassung festgelegt werden. Nachdem diese Grenze erreicht wird, erfolgt die Deaktivierung des jeweiligen Bilderfassungsgeräts, wobei dieses sich selbsttätig deaktivieren oder auch von der zentralen Steuereinheit deaktiviert werden kann.

Durch die grundsätzliche Auslegung des Überwachungssystems ist eine besonders komprimierte und bedarfsgerechte Archivierung relevanter Bilddaten ermöglicht, die u. a. eine spätere Auswertung des erhaltenen Datenmaterials erleichtert. Um darüber hinaus aber auch in der Art aktiver Sicherungsmaßnahmen zum Schutz des Ladeguts gegenüber Diebstahl beizutragen, ist das Überwachungssystem in besonders vorteilhafter Weiterbildung mit Mitteln zur gezielten Alarmauslösung für den Fall eines erkannten Diebstahlversuchs ausgestattet. Unter Nutzung der Auslegung des Überwachungssystems zur gezielten Einleitung von Maßnahmen nach der Erkennung eines Diebstahlversuchs, beispielsweise anhand der Bewegungsmelder, können diese Informationen somit nicht nur zur Auslösung der bedarfsgerechten Bilderfassung, sondern auch zur Erzeugung von Alarmmeldungen oder dergleichen herangezogen werden. Dazu ist die Steuereinheit des Überwachungssystems vorteilhafterweise datenausgangsseitig mit einem Sender zur drahtlosen Datenübertragung verbunden, über den im Bedarfsfall beispielsweise Alarmmeldungen verschickt werden können. Insbesondere kann dazu ein Mobilfunk-Modul (GSM-Modul oder beispielsweise satellitengestützt über INMARSAT) vorgesehen sein, mit dem beispielsweise mit einer Bewegungserkennung auf der Ladefläche eine Mitteilung auf ein Mobiltelefon des Fahrers oder an eine Zentralstation erfolgen kann.

In weiterer vorteilhafter Ausgestaltung ist das Überwachungssystem mit einer GPS-(Global-Positioning-System-) Einheit ausgestattet, so dass zusätzlich Daten über die aktuelle Position der Transporteinrichtung, beispielsweise des Lastkraftwagens, bereit gestellt werden können. Diese Positionsinformationen können gemeinsam mit den erfassten Bilddaten abgespeichert werden, so dass - gegebenenfalls unter zusätzlicher Abspeicherung von Datum und Uhrzeit - eine genaue auch örtliche Zuordnung der erfassten Bilddaten erfolgen kann. Des Weiteren können die Positionsdaten aber auch gemeinsam mit der Alarmmeldung oder mit anderen Daten an externe Empfänger wie beispielsweise eine Zentrale übermittelt werden, so dass in Echtzeit eine Nachverfolgung der Vorgänge auf der Ladefläche und eine gleichzeitige Positionsbestimmung ermöglicht ist. Zudem ist es dadurch möglich, von einer externen Einheit wie beispielsweise einer Logistikzentrale aus jederzeit die Position und den Betriebszustand der Transporteinrichtung abzufragen und von extern die Übertragung von Bildern auszulösen. Besonders vorteilhaft können die dabei gewonnenen Daten aber in Kombination mit auf der Speichereinheit hinterlegten Kennwerten für Positionen genutzt werden, an denen Be- oder Entladevorgänge vorgesehen sind und an denen somit ohnehin mit Bewegungen in der Transporteinrichtung gerechnet wird.

Vorteilhafterweise ist die Steuereinheit des Überwachungssystems dateneingangsseitig mit einem Informationssystem der Transporteinrichtung verbunden. Bei einem Lastkraftwagen kann es sich dabei insbesondere um ein Informationssystem über den aktuellen Fahrzustand wie beispielsweise einen Tachometer handeln. Somit ist es in besonders einfacher Weise möglich, den aktuellen Bewegungszustand des Fahrzeugs zu erkennen und die diesbezüglichen Informationen geeignet weiterzuverarbeiten. Dabei kann insbesondere vorgesehen sein, dass eine Aktivierung der Bilderfassungsgeräte oder sonstiger Maßnahmen nur dann erfolgt, wenn keine Fahrzeuggeschwindigkeit registriert wird, d. h., wenn sich das Fahrzeug im Ruhezustand befindet, so dass ein Diebstahl überhaupt denkbar wäre. Alternativ oder zusätzlich kann die Steuereinheit auch mit dem Zündschloss des Lastkraftwagens verbunden sein, so dass Alarmierungs- oder Erfassungsvorgänge nur dann gestartet werden, wenn das Zündschloss nicht betätigt ist und sich der Fahrer somit nicht im Fahrzeug befindet.

Um die Funktionalität des Überwachungssystems noch weiter zu erweitern, ist die Steuereinheit in weiterer vorteilhafter Ausgestaltung mit einer Anzahl von Schnittstellen zum bedarfsweisen Anschluss weiterer Funktionskomponenten wie beispielsweise Barcode-Scannern oder Artikelsicherungssystemen versehen. Auch die dadurch erhältlichen Informationen können elektronisch oder digital abgespeichert werden. Damit ist insbesondere der Anschluss von Warenidentifikationssystemen zur gezielten Nachverfolgung des Ladeguts, beispielsweise bei Be- oder Entladung, möglich.

Das Überwachungssystem ist für den Einsatz in verschiedenartigen Transporteinrichtungen, bei denen gegebenenfalls mit Diebstahl des Ladeguts gerechnet werden muss, geeignet, wie beispielsweise für Flugzeuge, Schiffs- oder andere Container oder dergleichen. In besonders vorteilhafter Ausgestaltung ist das Überwachungssystem aber für den Einsatz in Lastkraftwagen ausgestaltet.

Bezüglich des Verfahrens wird die genannte Aufgabe gelöst, indem in Abhängigkeit vom aktuellen Bewegungszustand der Transporteinrichtung und von einer festgestellten Bewegung im Laderaum eine Anzahl von Bilderfassungsgeräten aktiviert wird. Damit ist sichergestellt, dass die Bilderfassung nur in als relevant erkannten Situationen erfolgt, so dass die Datenbearbeitung und -archivierung besonders einfach gehalten ist.

Vorteilhafterweise wird die Bewegung im Laderaum anhand von Beschleunigungsdaten der Transporteinrichtung festgestellt. Dabei können insbesondere Beschleunigungssensoren zum Einsatz kommen, die derart empfindlich ausgelegt sein können, dass im Ruhezustand der Transporteinrichtung selbst vorsichtige Fortbewegungen von Personen auf der Ladefläche anhand der in der Ladefläche erzeugten Schwingungen erkannt werden können.

Die erfassten Bilddaten werden vorteilhafterweise digital, insbesondere auf einer Multi-Media-Card, abgespeichert.

Vorteilhafterweise erfasst das oder jedes Bilderfassungsgerät nach seiner Aktivierung eine vorgebbare Anzahl von Bildern und wird anschließend wieder deaktiviert. Das System geht dabei in einen Strom sparenden Überwachungsbetrieb über, so dass die Anzahl der aufgezeichneten Bilder auf das unbedingt notwendige Maß reduziert und gleichzeitig die Stromversorgung, insbesondere die Fahrzeugbatterie, geschont wird. Insbesondere kann das Überwachungssystem dabei derart ausgelegt sein, dass die Stromaufnahme im derartigen "Stand-By"-Modus lediglich etwa 40 mA beträgt.

Zur zusätzlichen Absicherung des Ladeguts wird nach einer Aktivierung von Bilderfassungsgeräten vorteilhafterweise eine Warnmeldung an einen dem Überwachungssystem zugeordneten Sender ausgegeben. Dadurch kann beispielsweise eine Mobilfunkmeldung an den Fahrer oder an eine Zentralstelle erzeugt werden. Weiterhin wird vorteilhafterweise nach einer Aktivierung von Bilderfassungsgeräten zusätzlich die Position der Transporteinrichtung bestimmt und gegebenenfalls mitarchiviert oder mitübermittelt.

Die mit der Erfindung erzielten Vorteile bestehen insbesondere darin, dass durch die bedarfsgerechte Aktivierung der Bilderfassungsgeräte bei nur geringem Speicher- oder Archivierungsbedarf eine besonders hohe Zuverlässigkeit bei der Laderaumüberwachung erreichbar ist. Insbesondere in Kombination mit der vorgesehenen Deaktivierung der Bilderfassungsgeräte nach einer vorgegebenen Überwachungszeit oder nach Erfassung nach einer vorgegebenen Maximalanzahl von Überwachungsbildern kann dabei der erforderliche Speicherbedarf besonders gering gehalten werden, so dass ohne Verlust an relevanten Informationen ein Rückgriff auf besonders robuste und flexibel einsetzbare digitale Speichertechnologie ermöglicht ist. Das Überwachungssystem kann somit besonders Ressourcen schonend betrieben werden, wobei insbesondere auch der Betrieb des Systems im Überwachungs- oder "Stand-By"-Modus besonders Ressourcen- und stromsparend erfolgen kann. Lediglich im Bedarfsfall, also bei einer erkannten unautorisierten Bewegung auf der Ladefläche, erfolgt dann eine vollständige Aktivierung des Systems mit entsprechend gesteigertem Strombedarf.

Ein Ausführungsbeispiel der Erfindung wird anhand einer Zeichnung näher erläutert. Darin zeigen:
- Fig. 1: schematisch ein Überwachungssystem, und
- Fig. 2: einen mit einem Überwachungssystem nach Fig. 1 ausgerüsteten Lastkraftwagen.

Gleiche Teile sind beiden Figuren mit denselben Bezugszeichen versehen.

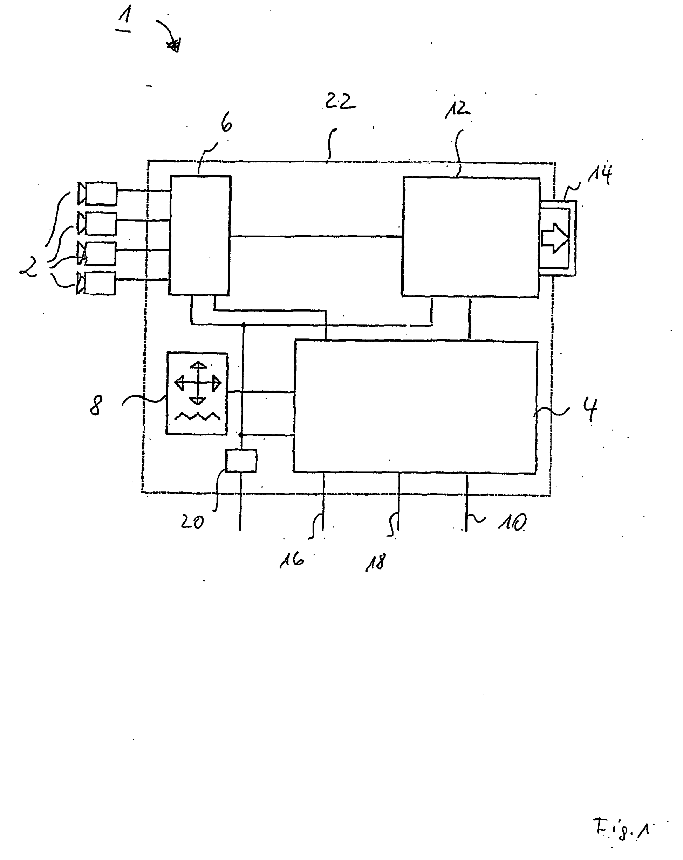

Das Überwachungssystem 1 gemäß Fig. 1 ist zur Absicherung des Laderaums einer Transporteinrichtung gegen Diebstahl des dort verwahrten Ladeguts vorgesehen. Bei der Transporteinrichtung kann es sich insbesondere um einen Lastkraftwagen, ein Flugzeug oder Container wie beispielsweise einen Schiffscontainer handeln, wobei das Überwachungssystem 1 auch zum Einsatz in anderen Transporteinrichtungen geeignet ist, in denen beispielsweise bei mitgeführter hochwertiger Ladung mit Diebstählen gerechnet werden muss. Das Überwachungssystem 1 ist für eine im Wesentlichen optische Überwachung des Laderaums ausgelegt und umfasst eine Anzahl von Bilderfassungsgeräten 2, die insbesondere als lichtstarke Videokameras ausgeführt sein können. Durch die Bilderfassungsgeräte 2 ist dabei die optische Dokumentation von Vorgängen auf dem zu überwachenden Laderaum möglich, wobei anhand der dabei gewonnenen Daten für eine spätere Auswertung möglicherweise die Identifizierung von Personen oder dergleichen ermöglicht werden soll.

Das Überwachungssystem 1 ist für eine hohe betriebliche Zuverlässigkeit bei besonders gering gehaltenem Speicherbedarf für die erhaltenen optischen Informationen ausgelegt. Dazu ist vorgesehen, dass die Bilderfassungsgeräte 2 des Überwachungssystems 1 nicht kontinuierlich im aktiven Modus Bilddaten erfassen, sondern dass die Bilddatenerfassung bedarfsgerecht und lediglich im als erforderlich angesehenen Fall ausgelöst wird. Dazu umfasst das Überwachungssystem 1 eine Steuereinheit 4, die datenausgangsseitig über einen zwischengeschalteten Multiplexer 6 oder Mischer mit den Bilderfassungsgeräten 2 verbunden ist. Die Steuereinheit 4 ist dabei dafür ausgelegt, die Bilderfassungsgeräte 2 lediglich im Bedarfsfall zu aktivieren, so dass diese mit der Erfassung von Bilddaten beginnen.

Um die auslegungsgemäß vorgesehene bedarfsabhängige Aktivierung der Bilderfassungsgeräte 2 zu ermöglichen, ist die Steuereinheit 4 dateneingangsseitig mit einer Anzahl von Bewegungsmeldern verbunden. Im Ausführungsbeispiel ist als Bewegungsmelder eine Anzahl von Beschleunigungssensoren 8 vorgesehen, die für eine vergleichsweise empfindliche Messwertaufnahme ausgelegt sind und aktuelle Beschleunigungsdaten in sämtlichen drei Raumrichtungen (x-, y-, z-Werte) liefern. Bei einer festen Verbindung mit der zu überwachenden Ladefläche können die Beschleunigungssensoren 8 dabei auch Erschütterungen erkennen, die von auf der Ladefläche befindlichen Personen hervorgerufen werden, so dass anhand der Beschleunigungssensoren 8 auf die Anwesenheit von Personen geschlossen werden kann. Alternativ oder zusätzlich kann die Anwesenheit von Personen im zu überwachenden Laderaum aber auch von Bewegungsmeldern herkömmlicher Art erkannt werden.

Um die bedarfsgerechte Aktivierung der Bilderfassungsgeräte 2 zu ermöglichen, ist zudem die Erkenntnis genutzt, dass lediglich in bestimmten Fällen die Anwesenheit von Personen auf der zu überwachenden Ladefläche als unautorisiert angesehen werden sollte. Insbesondere kann davon ausgegangen werden, dass während der Bewegung der Transporteinrichtung ein Diebstahl ausgeschlossen werden kann, da ein Diebstahlversuch in der Regel nur im still stehenden oder abgestellten Modus der Transporteinrichtung erfolgen sollte. Um dies bei der bedarfsgerechten Aktivierung der Bilderfassungsgeräte 2 berücksichtigen zu können, ist die Steuereinheit 4 dateneingangsseitig über eine Schnittstelle 10 mit einem Informationssystem der Transporteinrichtung, beispielsweise mit einem Elektroniksystem eines Flugzeugs oder Kraftfahrzeugs, verbindbar. Über die Schnittstelle 10 ist der Steuereinheit 4 somit ein Kennwert für den aktuellen Bewegungszustand der Transporteinrichtung zuführbar, der beispielsweise einem Tachoimpuls eines Kraftfahrzeugs entsprechen kann.

Um die erfassten Bilddaten einer späteren Auswertung oder auch einer Archivierung geeignet bereitstellen zu können, sind die Bilderfassungsgeräte 2 und die Steuereinheit 4 mit einer Speichereinheit 12 verbunden, die ein für eine digitale Datenspeicherung geeignetes Speichermodul 14 umfasst, wie sie beispielsweise auch in Digitalkameras Anwendung finden können. Diese Speicherkarte kann aus der Speichereinheit 12 entnommen und in anderen geeigneten Peripheriegeräten wie beispielsweise einem Personal Computer weiterbearbeitet werden, wobei beispielsweise ein Datentransfer zur Archivierung oder auch eine digitale Bildausweitung oder dergleichen vorgenommen werden könne. Zur Verhinderung von Manipulationen sind die Aufzeichnungen auf dem Speichermodul 14 dabei geeignet codiert, so dass eine zutreffende Auswertung sichergestellt ist. Des weiteren können die Informationen auf dem Speichermodul nach einem geeigneten Verfahren wie beispielsweise JPEG 2000 komprimiert sein, um den erforderlichen Speicherbedarf besonders gering zu halten.

Zusätzlich ist die Steuereinheit 4 noch mit einer Schnittstelle 16 zum Anschluss externer Sensoren und mit einer weiteren Schnittstelle 18 zum Anschluss weiterer Funktionseinheiten wie beispielsweise eines Senders zur drahtlosen Datenübertragung, einem GPS-Empfänger oder dergleichen versehen.

Die Steuereinheit 4, die Speichereinheit 12 und die Bilderfassungsgeräte 2 über den zugeordneten Multiplexer 6 sind zudem mit einer gemeinsamen Stromversorgung 20 verbunden, die ihrerseits eingangsseitig an die Stromversorgung der Transporteinrichtung, insbesondere an das Bordnetz eines Kraftfahrzeugs, angeschlossen ist. Die Steuereinheit 4, der Multiplexer 6, die Beschleunigungssensoren 8 und die Speichereinheit 12 sind im Ausführungsbeispiel innerhalb eines gemeinsamen Gehäuses 22 angeordnet. Da die wesentlichen Funktionskomponenten in integrierter Chiptechnologie ausgeführt sein können, kann das Gehäuse 22 in seinen Außenabmessungen vergleichsweise kompakt gehalten werden.

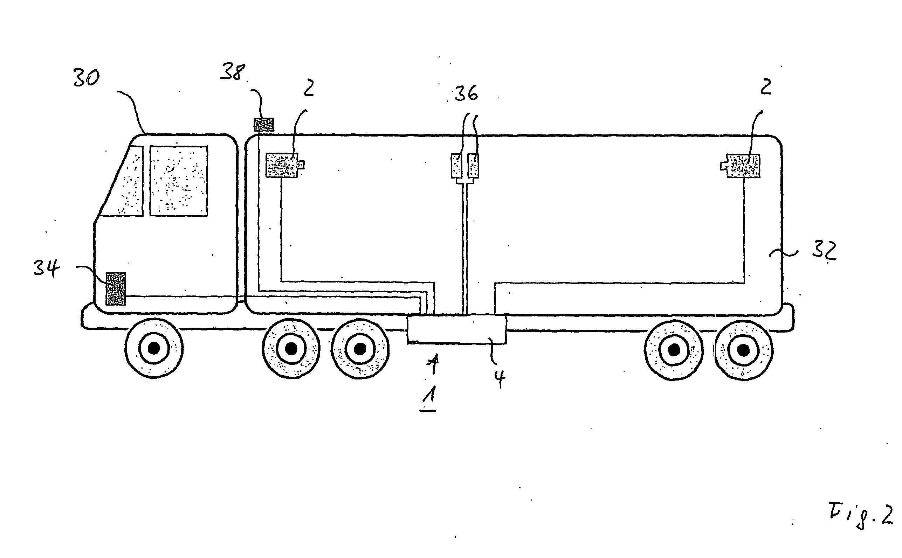

Wie der Darstellung in Fig. 2 entnehmbar ist, kann das Überwachungssystem 1 insbesondere in einen Lastkraftwagen 30 integriert sein und zur Überwachung von dessen Laderaum 32 dienen. Die Bilderfassungsgeräte 2 sind dabei innerhalb des Laderaums 32 geeignet, insbesondere endseitig, montiert, so dass eine vollständige räumliche Überwachung des Innenraums des Laderaums 32 möglich ist. Die Steuereinheit 4 ist dabei eingangsseitig mit der Bordelektrik 34 des Lastkraftwagens 30 verbunden, so dass insbesondere der Tachoimpuls und/oder Informationen über die eingeschaltete Zündung bei der Informationsverarbeitung mitberücksichtigt werden können. Des Weiteren ist die Steuereinheit 4 im Ausführungsbeispiel nach Fig. 2 mit zusätzlichen Messfühlern 36 verbunden, die einerseits weitere Informationen über den aktuellen Bewegungszustand des Laderaums 32 geben können, andererseits aber auch zusätzliche Informationen über Umgebungsdruck, Umgebungstemperatur und dergleichen liefern können, die eine Nachjustierung anderweitig gewonnener Messwerte ermöglichen. Des Weiteren ist im Ausführungsbeispiel nach Fig. 2 die Steuereinheit 4 mit einem Antennensystem 38 für GPS und Mobilfunk verbunden.

Das Überwachungssystem 1 ist im Wesentlichen darauf ausgerichtet, beim Stillstand der jeweiligen Transporteinrichtung, insbesondere des Lastkraftwagens 30, anhand der Beschleunigungssensoren 8 oder anderweitiger Bewegungsmelder zu erfassen, ob Bewegungen des Laderaums 32 oder im Laderaum 32 stattfinden. Wird eine derartige relevante Bewegung beispielsweise durch Erschütterung und/oder Vibration erkannt, so werden die Bilderfassungsgeräte 2 von der Steuereinheit 4 aktiviert. Nach ihrer Aktivierung erfassen die Bilderfassungsgeräte 2 eine vorgebbare Anzahl von Bildern und werden anschließend wieder deaktiviert. Dadurch werden die erfassten Bilder und die damit erfassten Daten auf besonders geringe Datenmengen reduziert, bei denen zudem sichergestellt ist, dass auch nur relevante Daten zur weiteren Auswertung gelangen. Damit ist bei hoher betrieblicher Sicherheit ein besonders gering gehaltener Speicherbedarf sichergestellt.

Sobald die als relevant erfassten Bewegungen auf der Ladefläche 32 auf eine Beladung, Entnahme (berechtigt oder unberechtigt durch Diebstahl) oder auch auf eine Beschädigung oder Zerstörung des Ladeguts schließen, erfolgt die Aufzeichnung einer vorbestimmten Anzahl von Bildern durch die Bilderfassungsgeräte 2, die anschließend auf dem Speichermodul 14 in digitaler Form abgespeichert werden. Dieser Vorgang kann auch durch externe Sensoren wie beispielsweise über Infrarotbewegungsmelder, Türkontakte oder dergleichen ausgelöst werden. In den abgespeicherten Bildern werden automatisch Datum und Uhrzeit des Ereignisses eingeblendet und mitabgespeichert, so dass eine nachfolgende Auswertung und Zuordnung der erfassten Daten besonders erleichtert ist.

Über die gegebenenfalls zusätzlich angeschlossenen GPS-Systeme kann der exakte Standort des Vorganges zusammen mit den Bildern abgespeichert werden. Außerdem ist es dadurch möglich, zwischen erlaubten Be- und Entladepositionen, die beispielsweise in einer Zentraleinheit abgespeichert sein können, und unerlaubten Positionen zu unterscheiden und somit automatisch Alarm über eine ebenfalls anschließbare Mobilfunk-Einheit (GSM-, UMTS-Modem, stallitengestützt über INMARSAT oder Ähnliches) auszulösen. Die Übertragung des ermittelten Standortes ist damit gegeben. Zudem ist es möglich, von einer externen Einheit wie beispielsweise einer Logistikzentrale jederzeit die Position und den Betriebszustand des Lastkraftwagens 30 abzufragen und die Übertragung von Bildern auszulösen. Zusätzlich kann eine Bildübertragung von miteinander gekoppelten Transporteinrichtungen zu einer übergeordneten Einheit (beispielsweise von einem Anhänger zur Zugmaschine (über Videofunksender) vorgesehen sein. Der Anschluss von Warenidentifikationssystemen (Barcode-Scannern, elektronischen Artikelssicherungssystemen oder dergleichen) kann zur Verfolgung des Ladeguts bei einer Be- oder Entladung vorgesehen sein. Auch diese Informationen werden auf dem elektronischen Datenspeicher hinterlegt. Weithin können physikalische Größen wie Temperatur und Luftfeuchte über geeignete Anschlüsse von Messfühlern überwacht und abgespeichert werden.

Durch den Aufbau des Überwachungssystems 1 ist eine besonders bedarfsgerechte Aktivierung der Bilderfassungsgeräte 2 und somit ein besonders Ressourcen sparender Betrieb möglich. Wenn sich der Lastkraftwagen 30 im Ruhezustand befindet und dennoch über die entsprechenden Sensoren eine Bewegung erkannt wird, werden die Bilderfassungsgeräte 2 aktiviert und eine durch den Anwender festzulegende Anzahl an Bildern auf dem Speichermodul 14 aufgezeichnet. Nach der Aufzeichnung schaltet das Überwachungssystem 1 bis zur nächsten erfassten Bewegung im Laderaum 32 in einen Stand-By-Modus, bei dem Strom gespart werden kann. Die Stromaufnahme beträgt dabei nur etwa 40 mA.

Durch das Überwachungssystem 1 ist somit eine lückenlose Überwachung des Laderaums 32 mit anschließender Archivierung der als relevant erfassten Bilder möglich. Durch eine entsprechend sensible Ausgestaltung der Bewegungsmelder oder Beschleunigungssensoren 8 ist auch die Aufzeichnung kleinster Bewegungen im Laderaum 32 möglich. Aufgrund der ausgewählten Komponenten ist eine starke Temperaturbelastbarkeit und ein hoher Einsatzbereich der möglichen Umgebungstemperaturen von - 25 °C bis + 85 °C gewährleistet. Zudem ist das Überwachungssystem 1 unempfindlich gegenüber Vibrations- oder Schockbelastungen, wobei zudem eine Manipulation an den erfassten Bildern ausgeschlossen ist.

Alternativ kann das Überwachungssystem 1 auch zur Überwachung eines Containers wie beispielsweise eines Schiffscontainers ausgelegt sein. Dabei wird insbesondere dem Umstand Rechnung getragen, dass bei einer derartigen Anwendung eine vergleichsweise lang andauernde Entkopplung von der Stromversorgung auftreten könnte, so dass ein geringer Stromverbrauch des Überwachungssystems von besondere Bedeutung ist. Für eine derartige Anwendung sind die Funktionskomponenten des Überwachungssystems vorteilhafterweise in einem See-oder Salzwasser-fest ausgestaltetem Gehäuse 22 angeordnet.

### Bezugszeichenliste

- 1: Überwachungssystem
- 2: Bilderfassungsgerät
- 4: Steuereinheit
- 6: Multiplexer
- 8: Beschleunigungssensoren
- 10: Schnittstelle
- 12: Speichereinheit
- 14: Speichermodul
- 16, 18: Schnittstellen
- 20: Stromversorgung
- 30: Lastkraftwagen
- 32: Laderaum
- 34: Bordelektrik
- 36: Messfühler
- 38: Antennensystem

## Patentansprüche

1. Überwachungssystem (1) für den Laderaum (32) einer Transporteinrichtung mit einer Steuereinheit (4), der ein Kennwert für den aktuellen Bewegungszustand der Transporteinrichtung zuführbar ist, und die dateneingangsseitig mit einer Anzahl von Bewegungsmeldern und datenausgangsseitig mit einer Anzahl von in Abhängigkeit vom aktuellen Bewegungszustand und einer Festgestellten Bewegung in Laderaum aktivierten Bilderfassungsgeräten (2) verbunden ist und bei dem das oder jedes Bilderfassungsgerät (2) mit einem Speichermodul (4) verbunden ist, wobei in dem oder jedem Speichermodul (14) Kennwerte für erlaubte Be- und/oder Entladepositionen hinterlegt sind.

2. Überwachungssystem (1) nach Anspruch 1, dessen Bewegungsmelder eine Anzahl von Beschleunigungssensoren (8) umfassen.

3. Überwachungssystem (1) nach Anspruch 1 oder 2, bei dem das oder jedes Speichermodul (14) für eine digitale Datenspeicherung, insbesondere als Multi-Media-Card, ausgebildet ist.

4. Überwachungssystem (1) nach einem der Ansprüche 1 bis 3, bei dem das oder jedes Bilderfassungsgerät (2) derart ausgelegt ist, dass es nach einer Aktivierung durch die Steuereinheit (4) eine vorgebbare Anzahl von Bildern erfasst und sich anschließend selbsttätig deaktiviert.

5. Überwachungssystem (1) nach einem der Ansprüche 1 bis 4, dessen Steuereinheit (4) datenausgangsseitig mit einem Sender zur drahtlosen Datenübertragung verbunden ist.

6. Überwachungssystem (1) nach einem der Ansprüche 1 bis 5, dessen Steuereinheit (4) mit einem GPS-Empfänger verbunden ist.

7. Überwachungssystem nach einem der Ansprüche 1 bis 6, deren Steuereinheit (4) dateneingangsseitig mit einem Informationssystem der Transporteinrichtung verbunden ist.

8. Überwachungssystem nach einem der Ansprüche 1 bis 7, deren Steuereinheit (4) mit einer Anzahl von Schnittstellen (16, 18) zum bedarfsweisen Anschluss weiterer Funktionskomponenten versehen ist.

9. Kraftfahrzeug (30) mit einem Laderaum, der mit einem Überwachungssystem (1) nach einem der Ansprüche 1 bis 8 versehen ist.

10. Verfahren zur Überwachung des Laderaums (32) einer Transporteinrichtung, bei dem in Abhängigkeit vom aktuellen Bewegungszustand der Transporteinrichtung und von einer festgestellten Bewegung im Laderaum (32) eine Anzahl von Bilderfassungsgeräten (2) aktiviert wird.

11. Verfahren nach Anspruch 10, bei dem die Bewegung im Laderaum (32) anhand von Beschleunigungsdaten der Transporteinrichtung festgestellt wird.

12. Verfahren nach Anspruch 10 oder 11, bei dem die erfassten Bilddaten digital, insbesondere auf einer Multi-Media-Card, gespeichert werden.

13. Verfahren nach einem der Ansprüche 10 bis 12, bei dem das oder jedes Bilderfassungsgerät (2) nach seiner Aktivierung eine vorgebbare Anzahl von Bildern erfasst und anschließend deaktiviert wird.

14. Verfahren nach einem der Ansprüche 10 bis 13, bei dem nach einer Aktivierung von Bilderfassungsgeräten (2) eine Warnmeldung an einen Sender ausgegeben wird.

15. Verfahren nach einem der Ansprüche 10 bis 14, bei dem die Position der Transporteinrichtung nach einer Aktivierung von Bilderfassungsgeräten (2) ebenfalls bestimmt wird.

## Claims

1. Monitoring system (1) for the cargo space (32) of a transporting device, having a control unit (4) to which a characteristic value for the current motion condition of the transporting device can be fed and which is connected on the data-input side with a number of motion detectors and on the data-output side, with a number of image acquisition devices (2), activated as a function of the current motion condition and of a motion detected in the cargo space, and in which the, or each, image acquisition device (2) is connected with a storage module (14), characteristic values for admissible loading and/or unloading positions being stored in the, or each, storage module (14).

2. Monitoring system (1) according to claim 1, whose motion detectors comprise a number of acceleration sensors (8).

3. Monitoring system (1) according to claim 1 or 2, in which the, or each, storage module (14) is designed for a digitized data storage, in particular in the form of a multi-media card.

4. Monitoring system (1) according to any of claims 1 to 3, in which the, or each, image acquisition device (2) is designed in such a way that after having been activated by the control unit (4), it acquires a specifiable number of images and afterwards deactivates itself automatically.

5. Monitoring system (1) according to any of claims 1 to 4, whose control unit (4) is connected on the data-output side with a transmitter for wireless data transmission.

6. Monitoring system (1) according to any of claims 1 to 5, whose control unit (4) is connected with a GPS receiver.

7. Monitoring system (1) according to any of claims 1 to 6, whose control unit (4) is connected on the data-input side with an information system of the transporting device.

8. Monitoring system (1) according to any of claims 1 to 7, whose control unit (4) is provided with a number of interfaces (16, 18) for connecting further functional components, as necessary.

9. Motor vehicle (30) having a cargo space (32) provided with a monitoring system (1) according to any of claims 1 to 8.

10. Method for monitoring the cargo space (32) of a transporting device, in which a number of image acquisition devices (2) are activated as a function of the current motion condition of the transporting device and of a motion detected in the cargo space (32).

11. Method according to claim 10, in which the motion in the cargo space (32) is detected by means of acceleration data of the transporting device.

12. Method according to claim 10 or 11, in which the acquired image data are stored in digitized form, in particular on a multi-media card.

13. Method according to any of claims 10 to 12, in which the, or each, image acquisition device (2) acquires, after having been activated, a specifiable number of images and is afterwards deactivated.

14. Method according to any of claims 10 to 13, in which, after activation of image acquisition devices (2), a warning message is output to a transmitter.

15. Method according to any of claims 10 to 14, in which the position of the transporting device is also determined after an activation of image acquisition devices (2).

## Revendications

1. Système de surveillance (1) du compartiment à marchandises (32) d'un dispositif de transport, ayant une unité de commande (4) à laquelle peut être alimentée une valeur caractéristique pour la condition actuelle de mouvement du dispositif de transport et qui est connectée, du côté d'entrée de données, à un nombre de détecteurs de mouvement et, du côté de sortie de données, à un nombre de dispositifs de saisie d'images (2), qui sont activés en fonction d'une condition actuelle de mouvement et d'un mouvement détecté dans le compartiment à marchandises, et dans lequel le, ou chaque, dispositif de saisie d'images (2) est connectée à un module mémoire (14), des valeurs caractéristiques pour les positions admissibles de chargement/de déchargement étant mémorisées dans le, ou chaque, module mémoire (14).

2. Système de surveillance (1) selon la revendication 1, dont les détecteurs de mouvement comprennent un nombre de capteurs d'accélération (8).

3. Système de surveillance (1) selon la revendication 1 ou 2, dans lequel le, ou chaque, module mémoire (14) est conçue pour une mise en mémoire des données sous forme numérique, en particulier en forme d'une carte multimédia.

4. Système de surveillance (1) selon l'une quelconque des revendications 1 à 3, dans lequel le, ou chaque, dispositif de saisie d'images (2) est conçue de façon qu'après avoir été activé par l'unité de commande (4), il saisit un nombre spécifiable d'images et se désactive après cela automatiquement.

5. Système de surveillance (1) selon l'une quelconque des revendications 1 à 4, dont l'unité de commande (4) est connectée, du côté de sortie de données, à un transmetteur pour une transmission sans fil de données.

6. Système de surveillance (1) selon l'une quelconque des revendications 1 à 5, dont l'unité de commande (4) est connectée à un récepteur GPS.

7. Système de surveillance (1) selon l'une quelconque des revendications 1 à 6, dont l'unité de commande (4) est connectée, du côté d'entrée de données, à un système d'informations du dispositif de transport.

8. Système de surveillance (1) selon l'une quelconque des revendications 1 à 7, dont l'unité de commande (4) est munie d'un nombre d'interfaces (16, 18) pour la connexion à d'autre composants fonctionnels, suivant les besoins.

9. Véhicule à moteur (30) ayant un compartiment à marchandises (32) muni d'un système de surveillance (1) selon l'une quelconque des revendications 1 à 8.

10. Procédé de surveillance du compartiment à marchandises (32) d'un dispositif de transport, dans lequel un nombre de dispositifs de saisie d'images (2) est activé en fonction de la condition actuelle de mouvement du dispositif de transport and d'un mouvement détecté dans le compartiment à marchandises (32).

11. Procédé selon la revendication 10, dans lequel le mouvement dans le compartiment à marchandises (32) est détecté au moyen de données d'accélération du dispositif de transport.

12. Procédé selon la revendication 10 ou 11, dans lequel les données d'images saisies sont mises en mémoire sous forme numérique, en particulier sur une carte multimédia.

13. Procédé selon l'une quelconque des revendications 10 à 12, dans lequel le, ou chaque, dispositif de saisie d'images (2) saisit, après avoir été activé, un nombre spécifiable d'images et est ensuite désactivé.

14. Procédé selon l'une quelconque des revendications 10 à 13, dans lequel, après l'activation de dispositifs de saisie d'images (2), un message d'avertissement est sorti à un transmetteur.

15. Procédé selon l'une quelconque des revendications 10 à 14, dans lequel la position du dispositif de transport est également déterminée après une activation de dispositifs de saisie d'images (2).
